# EUROPEAN PATENT SPECIFICATION

(11) **EP 1 537 568 B1**
(45) Date of publication and mention of the grant of the patent: **07.12.2011**
(21) Application number: 03719242.4
(22) Date of filing: 17.04.2003
(51) Int. Cl.: G11B 7/09

(54) **OPTICAL DISK**
OPTISCHER DATENTRÄGER
DISQUE OPTIQUE

(30) Priority: 10.09.2002 KR 2002054603
(43) Date of publication of application: 08.06.2005
(73) Proprietor: LG Electronics, Inc., Seoul 150-721 (KR)
(72) Inventor: LEE, Seoung-Won, Daejeon-si 306-817 (KR); SEO, Hun, Yongin-si, Gyeonggi-do 449-767 (KR); LEE, Jun-Seok, Jincheon-gun, Chungcheongbuk-do 365-831 (KR); KIM, Jin-Hong, Yongin-si, Gyeonggi-do 449-749 (KR); PARK, Kyung-Chan, Gangnam-gu, Seoul 135-110 (KR)
(74) Representative: Schorr, Frank Jürgen
(86) International application number: PCT/KR2003/000787
(87) International publication number: WO 2004/025638

(56) References cited:
- EP-A2- 0 497 604
- JP-A- 04 095 241
- JP-A- 08 203 115
- US-A- 5 999 512

## Description

### Technical Field

The present invention relates to an optical disk.

### Background Art

An optical disc having a projection is known from US 5,859,834.

Recently, optical disks having various structures have been developed to improve their recording density. The currently-used optical disks of high density include DVD-R, DVD-RAM, and the like.

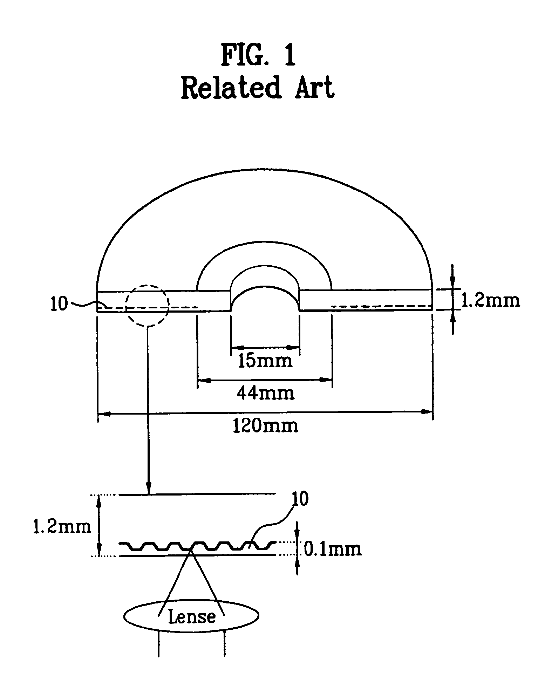

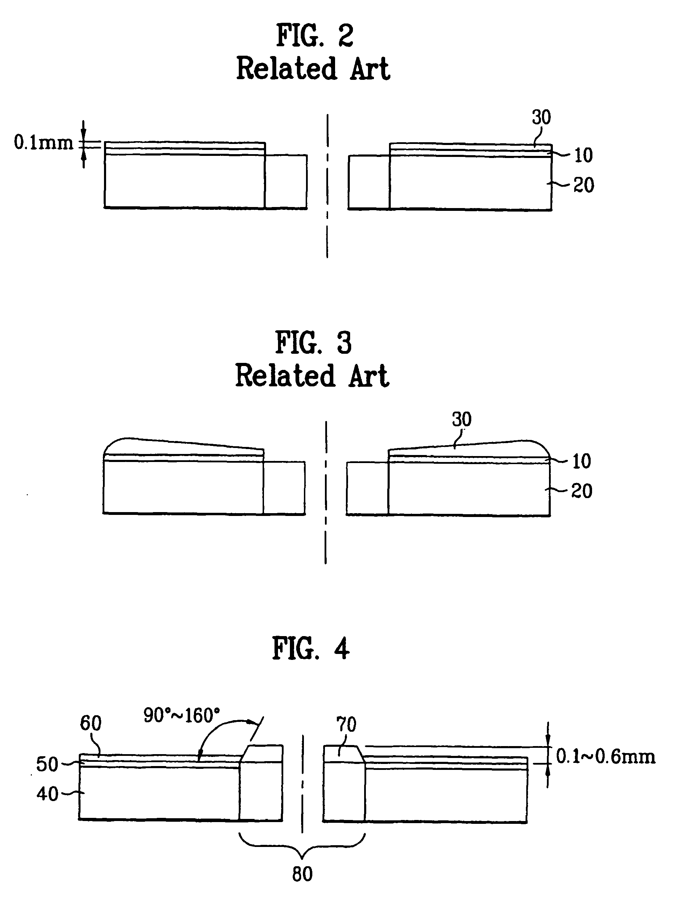

FIG. 1 and FIG. 2 illustrate diagrams of a high-density optical disk according to a related art. Referring to FIG. 1 and FIG. 2, an optical disk includes a disk 20 having a thickness of 1.2mm and a diameter of 120mm and a via hole formed at a central portion of the disk 20.

In this case, a circumference of the disk 20 has a recording layer 10 and the central portion of the disk 20 has the via hole instead of the recording layer 10.

A diameter of the via hole is about 15mm, and a diameter of the central portion is about 44mm.

And, the recording layer 10 is formed at a location about 0.1mm far from a surface of the disk 20 on which a light is incident.

Moreover, a protecting layer 30 is formed on the recording layer 10 to protect the recording layer 10. The protecting layer 30 is formed by attaching a transparent plastic film such as a polycarbonate sheet to the recording layer 10 or spin-coating a UV-hardening resin on the recording layer 10.

Spin coating on the protecting layer 30 is explained as follows.

First of all, a UV-hardening resin of liquid state is dropped on the recording layer adjacent to the central portion of the disk. Secondly, the disk is revolved to have the UV-hardening resin coated thereon from the central portion to the circumference by a centrifugal force. Finally, the UV-hardening resin coated on the disk is hardened by UV rays.

However, Spin coating, as shown in FIG. 3, fails to make the UV-hardening resin formed uniform on the recording layer 10. Namely, a thickness of the UV-hardening resin formed on the recording layer 10 becomes thicker from the center to the circumference of the disk.

Hence, the thickness deviation of the protecting layer 30 brings about the problem of failing to record/read the information on/from the recording layer 10.

### Disclosure of Invention

Accordingly, the present invention is directed to an optical disk that substantially obviates one or more problems due to limitations and disadvantages of the related art.

An aspect of the present invention is to provide an optical disk enabling to form a protecting layer having a uniform thickness thereon.

Another aspect of the present invention is to provide an optical disk enabling to facilitate a fabricating process thereof.

The object of the present invention is to provide an optical disk enabling to protect a disk surface.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

The above object is solved by the combination of features of independent claim 1. Preferred embodiments are defined in the dependent claims.

It is to be understood that both the foregoing general description and the following detailed description of the present invention are exemplary and explanatory and are intended to provide further explanation of the invention as claimed.

### Brief Description of the Drawings

Further objects and advantages of the invention can be more fully understood from the following detailed description taken in conjunction with the accompanying drawings, in which:
FIG. 1 and FIG. 2 illustrate diagrams of a high-density optical disk according to a related art;
FIG. 3 illustrates a diagram of a thickness of a protecting layer formed by spin coating;
FIGS. 4 to 6 illustrate cross-sectional views of optical disks wherein only Fig. 5 is fully according to embodiments of the present invention;
FIG. 7A and FIG. 7B illustrate cross-sectional views of a process of forming a protecting layer of an optical disk according to comparative examples of the present invention; and
FIG. 8 illustrates a diagram for protecting a disk surface by a projection of an optical disk according to comparative examples of the present invention.

### Best mode for Carrying Out the Invention

Reference will now be made in detail to the preferred embodiments of the present invention, examples of which are illustrated in the accompanying drawings. Wherever possible, the same reference numbers will be used throughout the drawings to refer to the same or like parts.

FIGs. 4 to 6 illustrate cross-sectional views of optical disks.

Referring to FIGs. 4 to 6, an optical disk includes a plate 40 having a first area enabling to record information thereon and a second area failing to record information thereon and a projection 70 formed on the second area of the plate 40.

In this case, the first and second areas are located at circumferential and central portions of the plate 40, respectively.

Moreover, a via hole is formed at the central portion 80 of the plate 40.

And, the circumferential portion of the plate 40 includes a recording layer 50 formed on the plate to record information thereon and a protecting layer formed on the recording layer 50 to protect the recording layer 50.

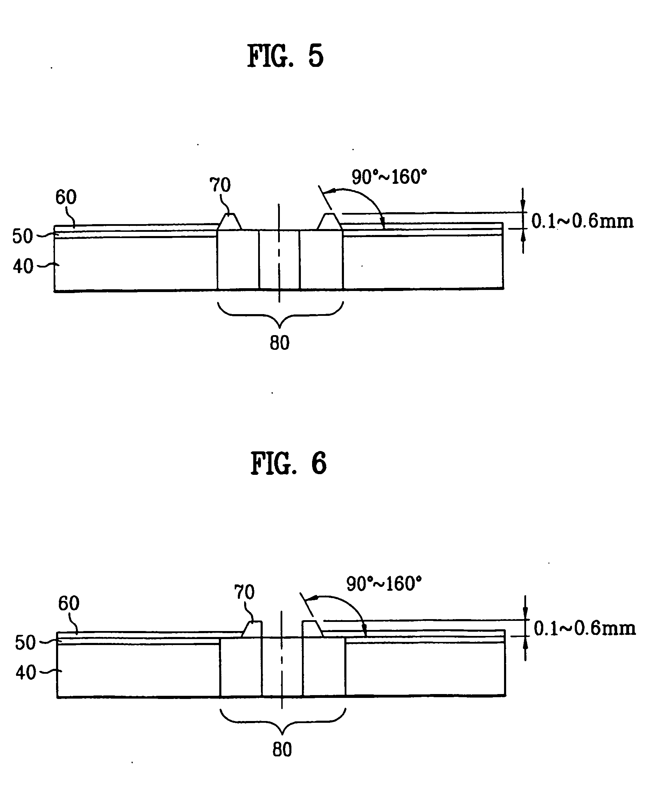

The projection 70 can be formed on an entire surface, as shown in FIG. 4, of the central portion 80, a boundary, as shown in FIG. 5, between the central portion 80 and the circumferential portion, or the central portion 80, as shown in FIG. 6, in part.

In this case, the projection 70 is formed to have at least one lateral side, which is inclined.

A flank angle of the projection 70 is preferably formed to be about 90~160°.

In this case, the flank angle of the projection 70 means an angle ranging from a surface of the recording layer 10 to the lateral side of the projection 70.

And, an upper surface of the projection 70 is formed higher than that of the protecting layer 60.

When the optical disk has a thickness of 1.2mm, a diameter of 120mm, a diameter of the via hole of about 15mm, and a diameter of the central portion of about 44mm, a height of the projection 70 is preferably about 0.1~0.6mm.

Spin coating for forming the protecting layer 60 on the disk having the projection 70 thereon is explained as follows.

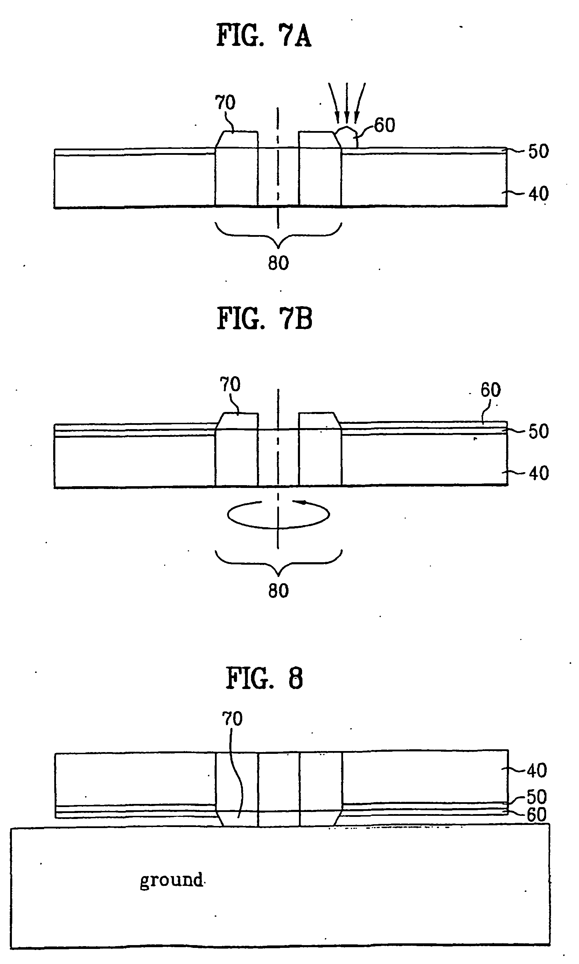

FIG. 7A and FIG. 7B illustrate cross-sectional views of a process of forming a protecting layer of an optical disk.

Referring to FIG. 7A, a liquefied UV-hardening resin is dropped on a recording layer 50 at one side of a projection 70 to form a protecting layer 60 thereon.

Referring to FIG. 7B, once a disk is revolved, a centrifugal force makes the UV-hardening resin coated on the disk from a center to an edge thereof. The coated UV-hardening resin is then hardened by UV light.

When spin coating is carried out on the W-hardening resin, the projection 70 having an inclined lateral side enables to prevent the liquefied UV-hardening resin from flowing into the central portion of the disk.

Moreover, the projection 70 maintains a uniform flow of the liquefied UV-hardening resin on spin coating, thereby enabling to form the protecting layer 60 uniform in thickness.

On injection of the disk, the projection 70 secures a wide inlet of a resin, thereby facilitating high-density injection.

Finally, the projection 70, as shown in FIG. 8, prevents the protecting layer 60 of the disk from being directly contacted with a ground, thereby enabling to prevent contamination or scratch on a surface of the protecting layer 60.

### Industrial applicability

The present invention provides an optical disk enabling to form a protecting layer having a uniform thickness thereon and also provides an optical disk enabling to facilitate a fabricating process thereon.

## Claims

1. An optical disk comprising:
a center hole;
a first side being an entrance surface to which a light beam is entranced;
a second side opposite to the first side, being a non-entrance surface;
a recording layer (50) located at about 0.1 mm below the surface of the first side;
a first area enabling to record information on the first side and a second area unable to record the information on the first side, wherein the second area is located between the center hole and the first area, with inner diameter of larger than 15 mm and outer diameter of smaller than 44 mm; and
a projection (70) extended from the second area, wherein an upper side of the projection (70) is higher than that of the first area;
wherein
the projection (70) is formed on a first portion of the second area, wherein the second area has a second portion on which no projection is formed;
the projection (70) is adapted to prevent the recording surface of the optical disk from being directly contacted with a surface on which the optical disk is placed; and
the projection (70) has the upper side and a bottom side, the width of the upper side being smaller than the bottom side, and the projection further including at least one inclined lateral side, the at least one inclined lateral side inclined from an end of the upper side to an end of the bottom side, being formed on an outer direction with respect to a center hole of the optical disk,
wherein the height of the upper side of the projection (70) is equal or lower than 0.6 mm; and
wherein the optical disc has a thickness of 1.2 mm and a diameter of 120 mm.

2. The optical disk of claim 1, wherein a flank angle of the projection ranges to 160°.

3. The optical disk of claim 1 or 2, wherein the projection (70) has two inclined lateral sides, each of the two inclined lateral sides being formed on an inner direction and outer direction with respect to the center hole of the optical disc, respectively.

4. The optical disk of one of claims 1 to 3, further comprising:
a protecting layer (60) on the recording layer (50) to protect the recording layer (50).

## Patentansprüche

1. Optischer Datenträger, der Folgendes umfasst:
ein mittiges Loch;
eine erste Seite, die eine Eintrittsfläche ist, in die ein Lichtstrahl hineingeleitet wird;
eine zweite Seite gegenüber der ersten Seite, die eine Nicht-Eintrittsfläche ist;
eine Aufzeichnungsschicht (50), die sich etwa 0,1 mm unter der Oberfläche der ersten Seite befindet;
einen ersten Bereich, der das Aufzeichnen von Informationen auf der ersten Seite ermöglicht, und einen zweiten Bereich, der nicht in der Lage ist, die Informationen auf der ersten Seite aufzuzeichnen, wobei sich der zweite Bereich zwischen dem mittigen Loch und dem ersten Bereich befindet, wobei der Innendurchmesser größer als 15 mm ist und der Außendurchmesser kleiner als 44 mm ist; und
einen Vorsprung (70), der sich von dem zweiten Bereich aus erstreckt, wobei eine Oberseite des Vorsprungs (70) höher ist als die des ersten Bereichs;
wobei
der Vorsprung (70) an einem ersten Abschnitt des zweiten Bereichs ausgebildet ist, wobei der zweite Bereich einen zweiten Abschnitt aufweist, an dem kein Vorsprung ausgebildet ist;
der Vorsprung (70) dafür geeignet ist zu verhindern, dass die Aufzeichnungsfläche des optischen Datenträgers in direkten Kontakt mit einer Oberfläche kommt, auf der sich der optischer Datenträger befindet; und
der Vorsprung (70) die Oberseite und eine Unterseite aufweist, wobei die Oberseite schmaler ist als die Unterseite, und wobei der Vorsprung des Weiteren mindestens eine geneigte laterale Seite enthält, wobei die mindestens eine geneigte laterale Seite von einem Ende der Oberseite zu einem Ende der Unterseite geneigt ist und in einer äußeren Richtung relativ zu einem mittigen Loch des optischen Datenträgers ausgebildet ist,
wobei die Höhe der Oberseite des Vorsprungs (70) gleich oder weniger als 0,6 mm ist; und
wobei der optische Datenträger eine Dicke von 1,2 mm und einen Durchmesser von 120 mm aufweist.

2. Optischer Datenträger nach Anspruch 1, wobei der Flankenwinkel des Vorsprungs bis zu 160° beträgt.

3. Optischer Datenträger gemäß Anspruch 1 oder 2, wobei der Vorsprung (70) zwei geneigte laterale Seiten aufweist, wobei jede der zwei geneigten lateralen Seiten in einer inneren Richtung bzw. einer äußeren Richtung relativ zu dem mittigen Loch des optischen Datenträgers ausgebildet sind.

4. Optischer Datenträger gemäß einem der Ansprüche 1 bis 3, der des Weiteren Folgendes umfasst:
eine Schutzschicht (60) auf der Aufzeichnungsschicht (50) zum Schutz der Aufzeichnungsschicht (50).

## Revendications

1. Disque optique comprenant :
un trou central ;
un premier côté étant une surface d'entrée dans laquelle on fait entrer un faisceau lumineux ;
un second côté opposé au premier côté étant une surface de non-entrée ;
une couche d'enregistrement (50) située à environ 0,1 mm au-dessous de la surface du premier côté ;
une première zone permettant d'enregistrer des informations sur le premier côté et une seconde zone incapable d'enregistrer les informations sur le premier côté, la seconde zone étant située entre le trou central et la première zone, avec un diamètre intérieur supérieur à 15 mm et un diamètre extérieur inférieur à 44 mm ; et
une saillie (70) étendue depuis la seconde zone, un côté supérieur de la saillie (70) étant plus haut que celui de la première zone ;
dans lequel
la saillie (70) est formée sur une première portion de la seconde zone, la seconde zone ayant une seconde portion sur laquelle aucune saillie n'est formée ;
la saillie (70) est adaptée pour empêcher la surface d'enregistrement du disque optique d'être directement en contact avec une surface sur laquelle le disque optique est placé ; et
la saillie (70) a le côté supérieur et un côté inférieur, la largeur du côté supérieur étant plus petite que celle du côté inférieur, et la saillie incluant en outre au moins un côté latéral incliné, le au moins un côté latéral incliné étant incliné d'une extrémité du côté supérieur à une extrémité du côté inférieur, étant formé sur une direction extérieure par rapport à un trou central du disque optique,
dans lequel la hauteur du côté supérieur de la saillie (70) est égale ou inférieure à 0,6 mm, et
dans lequel le disque optique a une épaisseur de 1,2 mm et un diamètre de 120 mm.

2. Disque optique selon la revendication 1, dans laquel l'angle du côté latéral incliné de la saillie s'élève jusqu'à 160°.

3. Disque optique selon la revendication 1 ou 2, dans lequel la saillie (70) a deux côtés latéraux inclinés, chacun des deux côtés latéraux inclinés étant formé sur une direction intérieure et une direction extérieure par rapport au trou central du disque optique, respectivement.

4. Disque optique selon l'une des revendications 1 à 3, comprenant en outre :
une couche de protection (60) sur la couche d'enregistrement (50) pour protéger la couche d'enregistrement (50).
